Europäisches Patentamt

European Patent Office

Office européen des brevets

(11) Publication number: **0 408 975 A2**

# EUROPEAN PATENT APPLICATION

(21) Application number: 90112651.6

(22) Date of filing: 03.07.90

(51) Int. Cl.⁵: **C08L 27/06**, //(C08L27/06, 71:02)

(30) Priority: 18.07.89 US 381335

(43) Date of publication of application:
**23.01.91 Bulletin 91/04**

(84) Designated Contracting States:
**AT BE CH DE DK ES FR GB GR IT LI LU NL SE**

(71) Applicant: **THE B.F. GOODRICH COMPANY**
**3925 Embassy Parkway**
**Akron Ohio 44313-1799(US)**

(72) Inventor: **Mertzel, Elaine Audrey**
**22272 Riverwalk Road**
**Rocky River, Ohio 44116(US)**
Inventor: **Sullivan, Francis Ryan**
**1401 Lynn Park Drive**
**Cleveland Heights, Ohio 44121(US)**

(74) Representative: **von Kreisler, Alek,**
**Dipl.-Chem. et al**
**Patentanwälte Von Kreisler-Selting-Werner,**
**Deichmannhaus am Hauptbahnhof**
**D-5000 Köln 1(DE)**

(54) Electrostatic dissipating polymeric material comprising ethylene oxide copolymer as an impact modifying agent.

(57) The present invention is directed to a high impact electrostatic dissipating material having exceptional weathering ability comprising a first polymer having a glass transition temperature greater than 25°C and a second polymer comprising ethylene oxide copolymer, wherein the GPC molecular weight relative to polystyrene of the second polymer is less than about 200,000 and about 10 to 25 parts by weight of the second polymer are present in the material based upon 100 weight parts of the first polymer.

In a preferred embodiment of the present invention, the second polymer is an ethylene oxide and epichlorohydrin copolymer having a weight ratio of less than about 80 parts ethylene oxide to greater than about 20 parts epichlorohydrin, wherein the GPC molecular weight relative to polystyrene of the second polymer is less than about 1,000,000.

EP 0 408 975 A2

# ELECTROSTATIC DISSIPATING POLYMERIC MATERIAL COMPRISING ETHYLENE OXIDE COPOLYMER AS AN IMPACT MODIFYING AGENT

## BACKGROUND OF THE INVENTION

Field of the Invention

The present invention relates generally to electrostatic dissipating materials having high impact strength. More specifically, the electrostatic dissipating material of the present invention comprises ethylene oxide copolymers as an impact modifying agent.

Discussion of the Prior Art

Polyvinyl chloride (PVC) and similar-type glassy polymers generally have poor impact properties, unless an impact modifier is compounded into the material during its manufacture. Broadly speaking, impact modifiers act as tiny shock absorbers within the polymer network, improving the polymer's ability to withstand significant deformation or concentrated stress.

Impact modifiers in general are well known and are generally rubbery polymers blended or alloyed with the glassy polymer. Certain ethylene copolymers are known to be useful impact modifiers when blended with PVC, and these copolymers include chlorinated polyethylene (CPE), ethylene-vinyl acetate (EVA), ethylene alkyl acrylate, ethylene-propylene grafted with acrylate, and chlorinated ethylene-1-butene.

U.S. Pat. No. 4,230,827 to Myers discloses certain ethylene oxide polymers as being useful as impact modifiers for PVC. The Myers patent is directed to ethylene oxide polymers comprising at least about 80 percent by weight ethylene oxide and having a viscosity average molecular weight of about 200,000 to about 10,000,000.

Electrostatic dissipating materials in general are known, and the following patents relate to the incorporation of high molecular weight electrostatic dissipating agents into plastic.

U.S. 4,588,773 to Federal et al discloses an electrostatic dissipating thermoplastic composition comprising a copolymer of acrylonitrile, butadiene, and styrene (ABS) and a copolymer of epihalohydrin. The claimed composition is defined as having more than 20% by weight of the epihalohydrin copolymer.

U.S. 4,775,716 to Kipouras et al discloses an electrostatic dissipating ABS blend comprising epihalohydrin-oxirane copolymer wherein the amount of ABS is 80% by weight or more. The required ratio of epihalohydrin to oxirane is defined as equal to or less than 1:1.

U.S. 4,719,263 to Barnhouse et al discloses an electrostatic dissipating composition comprising an epihalohydrin homopolymer or copolymer and chlorinated or polyvinyl chloride, polycarbonate, polyester, epoxy, phenolics, of mixtures thereof. Published European application 282,985 to Yu discloses a copolymer of epihalohydrin and ethylene oxide as an electrostatic dissipating additive. The preferred composition is defined as being at least 60% by weight ethylene oxide.

U.S. application 039,258, filing date April 17, 1987, to Yu is directed to an electrostatic dissipating polymeric composition comprising an electrostatic dissipating copolymer of ethylene oxide and a comonomer selected from the group consisting of cyclic ethers, cyclic acetals, and cyclic esters. The polymeric composition can further comprise any thermoplastic, thermoplastic elastomer or elastomer.

Published European application 294,722 discloses the use of polymethylmethacrylate (PMMA) in blends of SAN containing epichlorohydrin copolymer.

Also, certain impact modifiers are known to diminish the weathering ability of a polymeric material. Over time, numerous plastics will experience aging or weathering, at least to some extent. Such aging or weathering is generally caused by undesirable reactions initiated or accelerated over time due to ambient conditions, particularly sunlight (UV radiation), extreme temperature, airborne radicals (such as ozone), humidity and the like.

## OBJECTS OF THE INVENTION

It is therefore an object of the present invention to provide an effective electrostatic dissipating material having high impact strength and exceptional weathering ability.

It is a further object of the present invention to provide an impact modifying agent for electrostatic materials which is resistant to decomposition during injection molding or in similar-type environments and which can be added within a broad tolerance range.

It is a further object of the present invention to provide an impact modifying agent which is simple and easy to incorporate and use in a conventional PVC manufacturing process.

Other objects and features of the present invention will become readily apparent to those of ordinary skill in the art upon further reading of this specification and the attached claims.

## SUMMARY OF THE INVENTION

The present invention is directed to a high impact electrostatic dissipating material having exceptional weathering ability comprising a first polymer having a glass transition temperature greater than $25°C$ and a second polymer acting as an impact modifier substantially derived from the following comonomers:

i) ethylene oxide in the range from about 60% to about 95% by weight; and

ii) at least one heterocyclic comonomer in the range of from about 5% to about 40% by weight, whereby the cyclic comonomer comprises a ring comprising an oxygen atom and at least 2 carbon atoms; wherein the GPC molecular weight relative to polystyrene of the second polymer is less than about 200,000 and about 10 to 25 parts by weight of the second polymer are present in the material based upon 100 weight parts of the first polymer.

In a preferred embodiment of the present invention, the second polymer is an ethylene oxide and epichlorohydrin copolymer having a weight ratio of less than about 80 parts ethylene oxide to greater than about 20 parts epichlorohydrin, wherein the GPC molecular weight relative to polystyrene of the second polymer is less than about 1,000,000.

## DETAILED DESCRIPTION OF THE PREFERRED EMBODIMENT

The preferred embodiment of the present invention is directed to an alloy or blend of polyvinyl chloride and an ethylene oxide impact modifier. The preferred impact modifier comprises the polymer product of the following comonomers:

i) ethylene oxide in the range from about 5% to about 95% by weight; and

ii) at least one heterocyclic comonomer in the range of from about 95% to about 5% by weight, whereby the cyclic comonomer comprises a ring comprising an oxygen atom and at least 2 carbon atoms, wherein the ring is either free of pendant groups or comprises a pendant group which is further defined as a substituted or unsubstituted, saturated, unsaturated or partially saturated: a) aliphatic, particularly alkyls and haloalkyls; b) cycloaliphatic; c) aromatic; or d) combinations thereof.

The preferred ethylene oxide copolymer comprises ethylene oxide and epihalohydrin. The most preferred ethylene oxide copolymer comprises ethylene oxide and epichlorohydrin in a weight ratio of about 60-95:5-40, most preferably about 75:25.

The GPC molecular weight relative to polystyrene is preferably greater than 10,000 and less than 1,000,00, (more preferably less than 200,000 and most preferably less than 150,000). The copolymer is preferably free of pendant groups.

The copolymer is preferably blended with the PVC using conventional polymer blending technique and equipment. Any PVC is suitable in the present invention, and any of the usual PVC fillers or additives can also be used, including colorants, antioxidants, thermal stabilizers and the like. The blend preferably comprises about 10-25 weight parts ethylene oxide copolymer per hundred weight ("pph") PVC.

In the preferred embodiment, the ethylene oxide copolymer is first heated to at least about $130°C$ for at least about 15 minutes. This pretreatment of the ethylene oxide copolymer will volatilize off any low molecular weight contaminants or the like which may be present in the copolymer, thereby improving the performance of the final material.

The invention will be better understood after a review of the following examples.

3

## EXAMPLE 1

### Impact Study

The results of an an impact study are provided in Table 1. As shown in Table 1, samples tested were PVC (the "control"), PVC having 10 and 14 pph conventional impact modifier, and PVC having 10, 14 and 22 pph copolymer comprising ethylene oxide ("EO") and epichlorohydrin ("ECH") copolymer (having an EO:ECH weight ratio of 76:24 and a GPC molecular weight of about 150,000 relative to polystyrene).

| | | 10 pph | 10 pph | 14 pph | 14 pph | 22pph |
|---|---|---|---|---|---|---|
| | Control [1] | Modifier [2] | EO/ECH [3] | Modifier [4] | EO/ECH | EO/ECH |
| Notched Izod [5] | | | | | | |
| RT | 0.42 | 0.16 | 0.95 | 1.34 | 1.60 | 12.82 |
| 0° C | --- | --- | 0.70 | --- | .20 | ---- |
| -18° C | 0.45 | 0.60 | 0.60 | 0.65 | 0.70 | 1.13 |
| V HIT [6] | | | | | | |
| RT | 16.00 | 200.00 | 168.00 | 160.00 | 176.00 | 160.00 |
| -18° C | 7.00 | 112.00 | 22.00 | 68.00 | 42.00 | ------ |
| -29° C | 10.00 | 56.00 | 20.00 | 48.00 | 18.00 | 136.00 |

[1] The control comprised PVC without any impact modifier or ethylene oxide copolymer.

[2] The "modifier" used was a conventional acrylate modifier sold under the trade name "DURASTRENGTH" by M&T Corporation.

[3] The "EO/ECH" used was an ethylene oxide epichlorohydrin polymer having an EO:ECH weight ratio of 78:22 and a GPC molecular weight of about 150,000.

[4] The "modifier" used was a conventional acrylate modifier sold under the trade name "KM334" by Rohm & Haas.

[5] The "Notched Izod" test is a commonly used impact test outlined in American Test Standard D256.

[6] The "VHIT" test is a commonly used impact test outlined in American Test Standard D4226.

## EXAMPLE 2

### Weatherability Test

About 14 parts by weight of an EO:ECH copolymer (having a EO:ECH weight ratio of about 76:24 and a GPC molecular weight of about 150,000 relative to polystyrene) was mixed with 100 parts PVC and the resulting material was measured with a color spectrometer, then subjected to intense ultraviolet radiation for about 300 hours, and tested again with the same spectrometer. The traditional "L", "a" and "b" scales were measured in nanometers before and after exposure to ultraviolet radiation and the resulting delta E value was calculated by adding the differences in readings for each scale. A delta E of less than 1 is typically considered to indicate good weatherability. The delta E for the tested samples were 0.18 and 0.33.

**Claims**

1. A high impact electrostatic dissipating material having exceptional weathering ability comprising a first polymer having a glass transition temperature greater than 25°C and a second polymer acting as an impact modifier substantially derived from the following comonomers:

i) ethylene oxide in the range from about 60% to about 95% by weight; and

ii) at least one heterocyclic comonomer in the range of from about 5% to about 40% by weight, whereby the cyclic comonomer comprises a ring comprising an oxygen atom and at least 2 carbon atoms;

wherein the GPC molecular weight relative to polystyrene of the second polymer is less than about 200,000 and about 10 to 25 parts by weight of the second polymer are present in the material based upon 100 weight parts of the first polymer.

2. The composition of Claim 1 wherein the first polymer is further defined as being polyvinyl chloride.

3. The composition of Claim 2 wherein the second polymer is an ethylene oxide and epichlorohydrin copolymer having a weight ratio of less than about 80 parts ethylene oxide to greater than about 20 parts epichlorohydrin, wherein the GPC mlecular weight relative to polystyrene of the second polymer is less than about 1,000,000.

4. A method of manufacturing a high impact electrostatic dissipating material having exceptional weathering ability, said method comprising the steps of:

combining a first polymer having a glass transition temperature greater than about 25°C with a second polymer substantially derived from the following comonomers:

i) ethylene oxide in the range from about 60% to about 95% by weight; and

ii) at least one heterocyclic comonomer in the range of from about 5% to about 40% by weight, whereby the cyclic comonomer comprises a ring comprising an oxygen atom and at least 2 carbon atoms;

said second polymer having a GPC molecular weight relative to polystyrene of less than about 200,000 and the final mixture comprising about 10 to 25 parts by weight of the second polymer based upon 100 weight parts of the first polymer, wherein prior to the combining of the second polymer with the first, the second polymer is heated to at least about 130°C for at least about 15 minutes.